# DEMANDE DE BREVET EUROPEEN

(11) **EP 0 688 121 A1**
(43) Date de publication de la demande: **20.12.1995**
(21) Numéro de dépôt: 95201478.5
(22) Date de dépôt: 06.06.1995
(51) Int. Cl.: H04L 12/46, H04L 29/14

(54) **Système d'interconnexion de réseaux locaux et équipement destiné à être utilisé dans un tel système**

(30) Priorité: 15.06.1994 FR 9407310
(71) Demandeur: T.R.T. TELECOMMUNICATIONS RADIOELECTRIQUES ET TELEPHONIQUES, 75013 Paris (FR); Philips Electronics N.V., 5621 BA Eindhoven (NL)
(72) Inventeur: Ould-Ali, Abdelhamid, Société Civile S.P.I.D., F-75008 Paris (FR); Burgain, Alain, Société Civile S.P.I.D., F-75008 Paris (FR); Geffroy, Nicolas, Société Civile S.P.I.D., F-75008 Paris (FR)
(74) Mandataire: Chaffraix, Jean

(57) **Abrégé**

L'invention concerne un système d'interconnexion de réseaux locaux au travers d'un réseau étendu (WAN), certains noeuds d'interconnexion (N2) de ce réseau étant composés d'une pluralité d'équipements d'interconnexion redondants (BR2, BR3).

Selon l'invention, lesdits équipements redondants
- disposent d'une adresse physique fictive commune et d'une adresse logique commune de façon à former une seule entité vis-à-vis des stations du réseau local, seul l'un des équipements de cette entité remplissant une fonction de pont/routeur à un instant donné, les autres étant destinés à assurer son secours en cas de panne,
- comportent des moyens de surveillance de leurs états respectifs par échanges de trames sur le réseau local.

Applications: Interconnexion des réseaux locaux d'entreprise (Ethernet, Token Ring, X25, Relais de trames...)

## Description

La présente invention concerne un système d'interconnexion de réseaux locaux comportant au moins deux réseaux locaux interconnectés par l'intermédiaire d'un réseau étendu, certains noeuds d'interconnexion étant composés d'au moins deux équipements d'interconnexion redondants, chaque équipement d'interconnexion disposant d'une adresse physique propre.

L'invention concerne également un équipement d'interconnexion de réseaux destiné à être utilisé dans un tel système.

Elle a d'importantes applications dans le domaine de l'interconnexion de réseaux locaux d'entreprises. Par exemple, un tel système d'interconnexion est très fréquemment utilisé pour interconnecter des agences d'une entreprise avec les serveurs distants de son siège via des équipements d'interconnexion de type pont/routeur. Dans ce cas, les réseaux locaux d'extrémité et le réseau longue distance (Ethernet et X25 le plus souvent) offrent une grande fiabilité, et le maillon le plus faible du système est constitué par les équipements d'interconnexion tout particulièrement du côté serveurs.

Pour améliorer leur fiabilité, il est connu d'utiliser pour les noeuds d'interconnexion critiques, une pluralité de routeurs IP redondants, le système ainsi formé étant géré à partir d'échanges de messages spécifiques ICMP entre lesdits routeurs IP et les stations des réseaux locaux connectés à ces routeurs. Ce mécanisme d'échange de messages ICMP est décrit dans le document "Request For Comments 1256" publié par l'IETF en septembre 1991 et intitulé "ICMP Router Discovery Messages".

Plus précisément, ces messages spécifiques ICMP, qui sont encapsulés dans des trames IP, permettent aux stations des différents réseaux locaux d'apprendre les adresses des interfaces IP des routeurs qui sont localisés sur le sous-réseau Internet auquel elles appartiennent. De tels messages sont émis périodiquement par les routeurs vers les stations. Dans chaque message, plusieurs adresses peuvent être indiquées avec un ordre de préférence; les stations utiliseront pour transmettre leurs trames l'adresse de préférence la plus élevée à l'instant considéré. Chaque message comporte en outre un champ indiquant la limite de validité des adresses transmises dans le message de telle sorte que les stations oublient les adresses des routeurs qui tombent en panne ou qui ne sont plus accessibles.

Ainsi, une pluralité de routeurs IP peuvent être connectés de façon redondante. Ils émettent chacun périodiquement des messages spécifiques ICMP indiquant leur adresse et le niveau de préférence qui leur est respectivement attribué. Les stations du réseau local utilisent, pour transmettre leurs trames, le routeur dont l'adresse a la plus haute préférence. Lorsque ce routeur devient inaccessible (en cas de panne de l'équipement ou de la liaison par exemple) les stations ne reçoivent plus ses messages ICMP, et par conséquent lorsque la limite de validité du dernier message reçu est écoulée, elles oublient son existence et dirigent leur trames sur le routeur restant, de plus haute préférence.

Cette méthode présente toutefois l'inconvénient majeur de n'être applicable qu'à des équipements d'interconnexion de type routeurs IP vers des stations émulant le protocole IRDP (de l' anglais ICMP Router Discovery Protocol).

Le but de la présente invention est de proposer un système d'interconnexion de réseaux locaux dont certains noeuds d'interconnexion sont composés d'équipements d'interconnexion redondants, le système proposé étant indépendant de la nature de ces équipements et des protocoles qu'ils gèrent (ponts, pont/routeurs, routeurs multiprotocoles...).

Pour cela, un système d'interconnexion de réseaux locaux selon l'invention et tel que décrit dans le paragraphe introductif est caractérisé en ce que:
- lesdits équipements redondants disposent d'une adresse physique fictive commune et d'une adresse logique commune de façon à constituer une unique entité vis-à-vis des stations du réseau local auquel ils sont reliés, cette entité comprenant à un instant donné un seul équipement, dit équipement actif, assurant une fonction de pont/routeur, et un autre équipement, dit équipement en veille, destiné à assurer un secours de l'équipement actif,
- et en ce qu'ils comportent des moyens de surveillance de leurs états respectifs par échanges de trames, dites trames de surveillance sur ledit réseau local.

Ainsi, les équipements redondants d'un même noeud sont configurés de façon identique (à l'exception de leur adresse physique propre qui est différente) de telle sorte qu'ils sont vus comme une unique entité par les stations du réseau local. L'opération de basculement de la fonction pont/routeur d'un équipement d'interconnexion à l'autre, est donc transparent pour les stations du réseau local.

De plus, le mode de surveillance qui consiste à échanger, par l'intermédiaire du réseau local, des trames de surveillance entre les équipements redondants du noeud d'interconnexion (en utilisant leurs adresses physiques propres) , présente l'avantage de ne pas faire intervenir les stations du réseau local, et d'être totalement indépendant du protocole géré par lesdits équipements.

Dans un mode de réalisation préférentiel du système d'interconnexion selon l'invention, lesdits moyens de surveillance permettent:
- à l'équipement actif d'émettre régulièrement une trame de surveillance indiquant son état sur ledit réseau local à destination de l'équipement en veille,
- à l'équipement en veille de surveiller la réception des dites trames de surveillance et de passer à l'état actif lorsqu'il n'en reçoit plus.

De façon particulièrement avantageuse, dans un système d'interconnexion de réseaux locaux selon l'invention, chacun des deux équipements redondants d'un même noeud est vu au travers d'une connexion par les équipements distants du réseau étendu, l'une de ces connexions étant configurée comme étant principale et l'autre comme étant secondaire, et lesdits équipements distants comportent des moyens pour chercher, lors d'une tentative de connexion vers un noeud redondant, à établir de façon prioritaire ladite connexion principale puis, en cas d'échec seulement, ladite connexion secondaire.

Cette solution présente l'avantage d'être indépendante de la nature du réseau étendu.

Un autre but de la présente invention est de proposer un équipement d'interconnexion de réseaux, destiné à être utilisé dans un tel système d'interconnexion en étant éventuellement connecté de façon redondante avec au moins un autre équipement d'interconnexion de réseaux pour former un noeud d'interconnexion de réseaux redondant.

Conformément à l'invention, un tel équipement d'interconnexion de réseaux est caractérisé en ce que:
- il dispose d'une adresse physique fictive,
- et il comporte des moyens de surveillance de l'état de l'autre équipement formant ledit noeud d'interconnexion par échanges de trames, dites trames de surveillance, sur le réseau local auquel ils sont connectés, de telle sorte qu'à un instant donné un seul équipement, dit équipement actif, assure une fonction de pont/routeur, l'autre équipement, dit équipement en veille, étant destiné à assurer un secours de l'équipement actif.

D'autres particularités, détails, et avantages de la présente invention apparaîtront dans la description qui va suivre en regard des dessins annexés qui sont donnés à titre d'exemple non limitatif et dans lesquels:
- la figure 1 représente un exemple de système d'interconnexion de réseaux locaux selon l'invention,
- la figure 2 représente un exemple de trame de surveillance échangée entre équipements d'interconnexion redondants,
- la figure 3 représente un diagramme d'états d'un équipement d'interconnexion selon l'invention,
- la figure 4 représente un diagramme décrivant les échanges entre deux équipements redondants lors de leur démarrage consécutif, puis lors de la substitution de l'équipement en veille BR3 à l'équipement actif BR2 suite à une panne de ce dernier,
- la figure 5 représente un diagramme des échanges entre deux équipements redondants dans le cas d'un conflit entre équipements lors du démarrage,
- la figure 6 représente un exemple d'équipement d'interconnexion de réseaux selon l'invention.

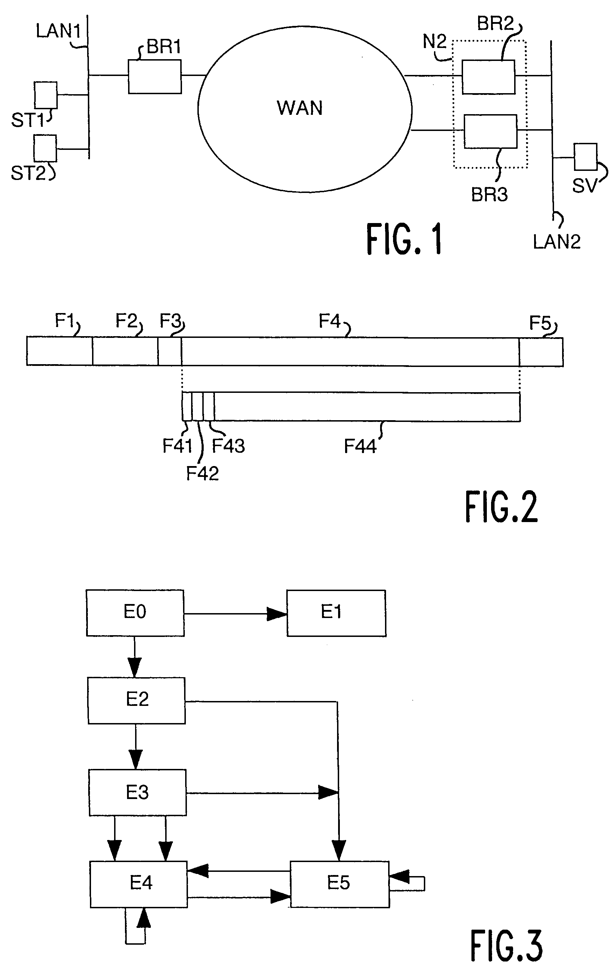

D'après la figure 1, un système d'interconnexion de réseaux locaux selon l'invention comporte un réseau local LAN1 sur lequel sont connectées des stations de travail ST1 et ST2. Ce réseau local est connecté à un réseau longue distance WAN par l'intermédiaire d'un équipement d'interconnexion de type pont/routeur BR1. D'autre part, ce système d'interconnexion de réseau comporte également un réseau local distant LAN2 sur lequel est connecté un serveur SV. Ce réseau local LAN2 est relié au réseau longue distance WAN par l'intermédiaire d'un noeud d'interconnexion N2 composé de deux équipements d'interconnexion redondants de type pont/routeur BR2 et BR3.

Dans la suite de l'exposé, on considérera que ces réseaux locaux LAN1 et LAN2 sont des réseaux Ethernet, et que le réseau longue distance WAN est un réseau X25, mais d'autres types de réseaux peuvent être utilisés (par exemple Token Ring pour les réseaux locaux, ou un réseau de type Relais de Trames pour le réseau longue distance...)
A un instant donné seul l'un de ces deux équipements d'interconnexion, BR2 par exemple, joue le rôle de pont/routeur en traitant les données qu'il reçoit. Cet équipement BR2 est dans un état actif. Il émet à intervalles réguliers une trame, dite trame de surveillance, sur le réseau local LAN2 à destination de l'autre équipement d'interconnexion BR3 pour lui indiquer qu'il est dans un état actif.

L'équipement BR3 est en état de veille: son seul rôle est alors de surveiller les trames de surveillance émise par l'équipement actif BR2 sur le réseau local LAN2.

Ainsi, le réseau longue distance étant un réseau de type X25, un circuit virtuel est établi entre les équipements d'interconnexion dont dépendent la station appelante et la station appelée lors de l'initialisation de la communication. Le noeud d'interconnexion N2 est vu par les équipements distants du réseau étendu au travers de deux connexions réseaux différentes, l'une étant configurée comme étant une connexion principale et l'autre comme étant une connexion secondaire. De préférence, la connexion principale est associée à l'équipement redondant qui a un rôle actif en fonctionnement normal, c'est-à-dire à l'équipement redondant de plus faible adresse physique propre. Lors de l'initialisation de la communication, l'équipement distant dont dépend la station appelante tente d'établir la connexion principale. En cas d'échec de cette tentative, il tente alors d'établir la connexion secondaire. A un instant donné seule la connexion vers l'équipement actif peut être établie, les demandes d'appel émises vers l'équipement en veille étant ignorées par ce dernier.

Par exemple, si la station ST1 du réseau local LAN1 souhaite faire une demande de transfert de fichier au serveur SV du réseau distant LAN2, l'équipement d'interconnexion BR1 tentera tout d'abord d'établir la connexion principale vers l'équipement redondant BR2. S'il est actif cet équipement répondra à la demande d'appel et un circuit virtuel sera établi entre les équipements BR1 et BR2. Au contraire, s'il est inactif, l'équipement BR2 ignorera cette demande d'appel, et l'équipement BR1 tentera d'établir la connexion secondaire vers l'équipement BR3.

Dans le cas où le réseau longue distance serait un réseau de type non connecté, un circuit virtuel serait de même établi sur l'arrivée de chaque paquet de données avec l'équipement d'interconnexion actif.

De plus, les équipements d'interconnexion BR2 et BR3 disposent d'une adresse physique fictive commune, distincte de leur adresse physique propre, et qui est la seule à être connue des stations du réseau, ainsi que d'une adresse logique identique. Le noeud d'interconnexion N2 forme donc une seule machine fictive à structure redondante. C'est ce qui permet, en cas de défaillance de l'équipement actif BR2, de lui substituer, de façon transparente pour l'ensemble du système, l'équipement BR3 pour assurer en secours la fonction de pont/routeur multiprotocoles.

Cette adresse physique fictive est spécifiée par le configurateur qui choisit un numéro sur deux caractères en hexadécimal auquel l'équipement ajoute l'adresse attribuée au constructeur.

La figure 2 donne la structure d'une trame de surveillance échangée entre les deux équipements redondants BR2 et BR3. Cette trame est une trame TEST de la couche liaison de données définie par la norme OSI 802.2. Elle est véhiculée dans le champ données des trames de la couche physique, c'est-à-dire, en reprenant l'exemple de la figure 1, dans le champ données des trames Ethernet. Une telle trame Ethernet comporte donc:
- un premier champ F1 de 6 octets indiquant l'adresse physique de destination de la trame, c'est-à-dire dans cet exemple, l'adresse physique fictive de l'équipement redondant,
- un second champ F2 de 6 octets indiquant l'adresse source de la trame, c'est-à-dire l'adresse physique propre de l'équipement émetteur de la trame,
- un troisième champ F3 de 2 octets indiquant la longueur du champ de données de la trame, qui est de 30 octets dans cet exemple,
- un quatrième champ F4 qui constitue ledit champ de données et qui contient donc la trame TEST de la couche liaison de données (cette trame TEST sera décrite par la suite),
- un cinquième champ F5 codé sur 4 octets, qui contient une séquence de contrôle, couramment appelée "Checksum", et qui permet de détecter les erreurs éventuelles dans la trame.

Le quatrième champ qui contient la trame TEST de la couche liaison de données, regroupe:
- un premier champ F41 sur 1 octet indiquant l'adresse du point d'accès au niveau de l'interface entre la couche réseau et la couche liaison de données, en émission (on parle habituellement de SSAP de l'anglais Source Service Access Point). Ici, la valeur de cette adresse est nulle puisqu'aucun accès à la couche réseau n'est nécessaire.
- un second champ F42 sur 1 octet indiquant l'adresse du point d'accès au niveau de l'interface entre la couche liaison de données et la couche réseau, en réception (on parle habituellement de DSAP de l' anglais Destination Service Access Point). Cette adresse a également une valeur nulle.
- un troisième champ F43 dit champ de contrôle codé sur un octet, qui indique le type de la trame; il s'agit ici d'une trame TEST, ce qui selon la norme OSI 802.2 correspond au code E3 en hexadécimal,
- un quatrième champ F44 codé sur 27 octets qui contient les informations proprement dites, c'est-à-dire dans ce cas un message indiquant qu'il s'agit d'une trame de surveillance.

La figure 3 donne un diagramme d'états d'un équipement selon l'invention. L'état EO de ce diagramme correspond à l'état initial. A partir de cet état deux situations sont possibles lorsqu'un événement de mise en service se produit:
- dans un premier cas, l'équipement a été configuré pour fonctionner en mode classique (non redondant) et il passe donc à l'état E1 qui correspond à un fonctionnement classique de l'équipement,
- dans un second cas, il a été configuré pour fonctionner en mode redondant, et il passe à l'état E2. Dans l'état E2, l'équipement écoute le réseau local pendant une première durée déterminée, appelée durée de surveillance et notée Ts2, de façon à détecter une éventuelle trame de surveillance qui serait émise par l'autre équipement redondant pour indiquer qu'il est actif. Une telle situation se produit lors du redémarrage d'un équipement après une panne. S'il reçoit effectivement une trame de surveillance pendant cette durée de surveillance Ts2, l'équipement passe à l'état E5, c'est-à-dire à l'état de veille. Sinon, lorsque la durée de surveillance Ts2 est écoulée, il passe à l'état E3.

L'état E3 permet de résoudre les conflits dans le cas où les deux équipements redondants démarrent en même temps. Dans cet état, l'équipement commence par émettre une trame de surveillance. Si pendant une seconde durée de surveillance Ts3 il reçoit une trame de surveillance de l'autre équipement redondant, on est dans un cas de conflit. C'est alors l'équipement dont l'adresse physique propre est la plus petite qui devient actif, l'autre passant à l'état de veille. En résumé, lorsque l'équipement est dans l'état E3, s'il reçoit une trame de surveillance et si son adresse physique propre est supérieure à celle de l'autre équipement redondant, il passe à l'état E5, c'est-à-dire à l'état de veille. En revanche, si la durée de surveillance Ts3 est écoulée ou s'il reçoit une trame de surveillance et que son adresse physique propre est inférieure à celle de l'autre équipement redondant, l'équipement passe à l'état E4, c'est-à-dire à l'état actif.

Lorsqu'il est dans l'état E2 ou dans l'état E3, l'équipement ne traite pas les trames de données qu'il reçoit.

Dans l'état actif E4, l'équipement traite de façon classique les trames de données qu'il reçoit. De plus à intervalles de temps réguliers Te, il émet une trame de surveillance à destination de l'autre équipement redondant. Par ailleurs, s'il reçoit une trame de surveillance et que son adresse physique propre est inférieure à celle de l'autre équipement redondant, il reste dans l'état actif. En revanche si elle est supérieure, il passe à l'état de veille E5.

Dans l'état de veille E5, l'équipement ne traite pas les trames de données qu'il reçoit. Lorsqu'il reçoit une trame de surveillance, il réinitialise un temporisateur appelé temporisateur de surveillance. Lorsque le temporisateur de surveillance atteint l'échéance, l'équipement passe à l'état actif E4.

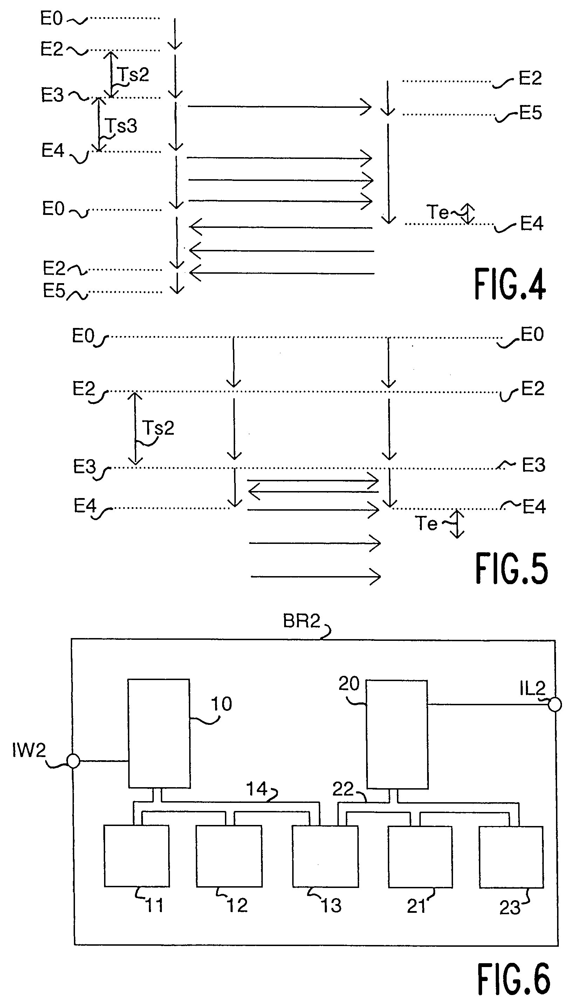

La figure 4 représente un diagramme décrivant les échanges entre deux équipements redondants lors de leur démarrage consécutif, puis lors de la substitution de l'équipement en veille BR3 à l'équipement actif BR2 suite à une panne de ce dernier.

L'équipement BR2 reçoit tout d'abord un événement de mise en service et passe à l'état E2 et écoute le réseau local pendant un premier temps de surveillance Ts2. Pendant ce premier temps de surveillance, l'équipement BR3 est mis en service. Il passe alors à l'état E2 et écoute le réseau local. Une fois le temps de surveillance Ts2 de l'équipement BR2 écoulé, il passe dans l'état E3 et émet une trame de surveillance à destination de l'équipement BR3, puis il écoute le réseau local pendant un second temps de surveillance Ts3. L'équipement BR3 reçoit cette trame de surveillance et passe à l'état de veille E5. Une fois le second temps de surveillance Ts3 de l'équipement BR2 écoulé, il passe à l'état actif E4 et émet à intervalle de temps régulier Te une trame de surveillance à destination de l'équipement d'interconnexion BR3. Puis, suite à une panne, l'équipement BR2 est mis hors service. Le temporisateur de surveillance de l'équipement BR3 atteint alors l'échéance (Te) sans avoir reçu de trame de surveillance de l'équipement BR2. Il passe donc à l'état actif E4 et émet à intervalle de temps régulier Te des trames de surveillance vers l'équipement BR2. Puis, l'équipement BR2 est à nouveau mis en service. Il passe alors à l'état E2 et écoute le réseau local. Il reçoit au bout d'un certain temps une trame de surveillance de l'équipement BR3 et passe donc à l'état de veille E5.

La figure 5 représente un diagramme des échanges entre deux équipements redondants dans le cas d'un conflit entre équipements lors du démarrage.

Les équipements BR2 et BR3 sont mis en service simultanément. Il passent tous les deux à l'état E2 et écoutent le réseau local pendant la durée de surveillance Ts2. Celle-ci écoulée ils passent à l'état E3 et émettent une trame de surveillance à destination des équipements BR3 et BR2 respectivement. L'adresse physique propre de l'équipement BR2 étant inférieure à celle de l'équipement BR3, l'équipement BR2 passe à l'état actif E4 tandis que l'équipement BR3 passe à l'état de veille E5. L'équipement BR2 émet donc régulièrement des trames de surveillance à destination de l'équipement BR3.

D'après la figure 6, un équipement d'interconnexion de réseaux BR2 selon l'invention dispose d'une interface réseau étendu IW2 qui est reliée à un processeur d'applications 10 constitué par exemple par un 68302 de Motorola. Ce processeur 10 est lui-même relié par un bus 14 à une mémoire 11, dite mémoire de configuration de l'équipement, et qui contient notamment une variable indiquant le mode redondant ou classique de l'équipement, ainsi qu'une adresse physique fictive, une adresse physique propre et une adresse logique de l'équipement. Le processeur 10 est également relié par ce bus 14 à une mémoire statique 12 qui contient les instructions de fonctionnement du processeur 10, notamment celles nécessaires à la mise en oeuvre de l'invention conformément au diagramme d'états représenté sur la figure 3, et à une mémoire vive 13 contenant des données. L'équipement d'interconnexion BR2 dispose également d'au moins une interface réseau local IL2 qui est reliée à un contrôleur de communication 20 formé par exemple, pour des réseaux locaux Ethernet, à partir d'un transmetteur Intel 82503 et d'un contrôleur Intel 82596DX. Ce contrôleur de communication 20 est lui-même relié par un bus 22 à un processeur de communication 23 constitué par exemple par un T400 de Inmos, et à une mémoire statique 21 contenant les instructions de fonctionnement du processeur de communication 23, notamment celles nécessaires à la mise en oeuvre de l'invention, et à la mémoire de données 13 précitée. La communication entre les deux processeurs 10 et 23 se fait donc par l'intermédiaire de la mémoire de données 13.

Il va de soi que des modifications peuvent être apportées au mode de réalisation qui vient d'être décrit, notamment par substitution de moyens techniques équivalents sans que l'on sorte pour cela du domaine de la présente invention.

Par exemple, il serait possible de réaliser l'invention à partir d'un unique équipement disposant de deux fonctions pont/routeur distinctes qui bénéficient donc d'un même environnement électrique et mécanique (sous forme de deux cartes dans un même châssis par exemple).

Il serait également possible de réaliser l'invention à partir d'un équipement disposant d'un seul processeur qui regrouperait les fonctions du processeur de communication 23 et du processeur d'application 20.

## Revendications

1. Système d'interconnexion de réseaux locaux comportant aux moins deux réseaux locaux (LAN1, LAN2) interconnectés par l'intermédiaire d'un réseau étendu (WAN), certains noeuds d'interconnexion (N2) étant composés d'au moins deux équipements d' interconnexion redondants (BR2, BR3), chaque équipement d'interconnexion disposant d'une adresse physique propre, caractérisé en ce que:
- lesdits équipements redondants (BR2, BR3) disposent d'une adresse physique fictive commune et d'une adresse logique commune de façon à constituer une unique entité vis-à-vis des stations (SV) du réseau local (LAN2) auquel ils sont reliés, cette entité comprenant à un instant donné un seul équipement (BR2 ou BR3), dit équipement actif, assurant une fonction de pont/routeur, et un autre équipement (BR3 ou BR2), dit équipement en veille, destiné à assurer un secours de l'équipement actif,
- et en ce qu'ils comportent des moyens de surveillance de leurs états respectifs par échanges de trames, dites trames de surveillance sur ledit réseau local.

2. Système d'interconnexion de réseaux locaux selon la revendication 1, caractérisé en ce que lesdits moyens de surveillance permettent:
- à l'équipement actif (BR2 ou BR3) d'émettre régulièrement une trame de surveillance indiquant son état sur ledit réseau local (LAN2) à destination de l'équipement en veille (BR3 ou BR2),
- à l'équipement en veille (BR3 ou BR2) de surveiller la réception des dites trames de surveillance et de passer à l'état actif lorsqu'il n'en reçoit plus.

3. Système d'interconnexion de réseaux locaux selon l'une des revendications 1 ou 2, caractérisé en ce que:
- chacun des deux équipements redondants d'un même noeud est vu au travers d'une connexion par les équipements distants du réseau étendu, l'une de ces connexions étant configurée comme étant principale et l'autre comme étant secondaire,
- et en ce que lesdits équipements distants comportent des moyens pour chercher, lors d'une tentative de connexion vers un noeud redondant, à établir de façon prioritaire ladite connexion principale puis, en cas d'échec seulement, ladite connexion secondaire.

4. Système d'interconnexion de réseaux locaux selon l'une des revendications 1 à 3, caractérisé en ce qu'il comporte des moyens pour déterminer celui des équipements qui est actif en fonctionnement normal à partir des adresses physiques propres des dits équipements (BR2, BR3).

5. Equipement d'interconnexion de réseaux (BR2, BR3), destiné à être utilisé dans un système d'interconnexion de réseaux locaux (LAN1, LAN2) au travers d'un réseau étendu (WAN), en étant éventuellement connecté de façon redondante avec au moins un autre équipement d'interconnexion de réseaux (BR3, BR2) pour former un noeud d'interconnexion de réseaux redondant (N2), caractérisé en ce que:
- il dispose d'une adresse physique fictive,
- et il comporte des moyens de surveillance de l'état de l'autre équipement formant ledit noeud d'interconnexion par échanges de trames, dites trames de surveillance, sur le réseau local auquel ils sont connectés, de telle sorte qu'à un instant donné un seul équipement, dit équipement actif, assure une fonction de pont/routeur, l'autre équipement, dit équipement en veille, étant destiné à assurer un secours de l'équipement actif.

6. Equipement d'interconnexion de réseaux selon la revendication 5, caractérisé en ce que lesdits moyens de surveillance permettent:
- à l'équipement actif (BR2 ou BR3) d'émettre régulièrement une trame de surveillance indiquant son état sur ledit réseau local (LAN2) à destination de l'équipement en veille (BR3 ou BR2),
- à l'équipement en veille (BR3 ou BR2) de surveiller la réception des dites trames de surveillance et de passer à l'état actif lorsqu'il n'en reçoit plus.

7. Equipement d'interconnexion de réseaux selon l'une des revendications 5 ou 6, caractérisé en ce qu'il comporte des moyens pour lui interdire, lorsqu'il est en état de veille, d'établir une connexion au travers du réseau étendu (WAN) vers un équipement distant.
